## Europäisches Patentamt

## European Patent Office

## Office européen des brevets

(19)

(11) Veröffentlichungsnummer: **0 048 408**
B1

(12) **EUROPÄISCHE PATENTSCHRIFT**

(45) Veröffentlichungstag der Patentschrift:
27.02.85

(51) Int. Cl.⁴: **G 02 B 6/28**

(21) Anmeldenummer: **81107156.2**

(22) Anmeldetag: **10.09.81**

(54) **Optischer Stern-Koppler mit planarem Mischerelement und Verfahren zu seiner Herstellung.**

(30) Priorität: **24.09.80 DE 3036044**

(43) Veröffentlichungstag der Anmeldung:
**31.03.82 Patentblatt 82/13**

(45) Bekanntmachung des Hinweises auf die Patenterteilung:
**27.02.85 Patentblatt 85/9**

(84) Benannte Vertragsstaaten:
**BE DE FR GB IT NL**

(56) Entgegenhaltungen:
**EP - A - 0 037 006**

**LASER FOCUS, Band 15, Nr. 10, Oktober 1979 L.J. COYNE "Coupling: Do It With A Star", Seiten 60 bis 66
ELECTRONICS LETTERS, Band 16, Nr. 15, Juli 1980 K. NOSU et al. "Slab Waveguide Star Coupler For Multimode Optical Fibres", Seiten 608 bis 609
APPLIED OPTICS, Band 19, Nr. 15, August 1980 M. STOCKMANN et al. "Planar Star Coupler For Multimode Fibers", Seiten 2584 bis 2588**

(73) Patentinhaber: **Siemens Aktiengesellschaft, Berlin und München Wittelsbacherplatz 2, D-8000 München 2 (DE)**

(72) Erfinder: **Witte, Hans-Hermann, Dr., Dipl.-Phys., Hippelstrasse 15, D-8000 München 82 (DE)**

## Beschreibung

Die Erfindung betrifft einen optischen Sternkoppler für Multimode-System-Lichtleitfasern nach dem Oberbegriff des Anspruchs 1, bei dem zwei Bündel von Element-Lichtleitfasern über ein aus einem planaren Wellenleiter bestehendes Mischerelement miteinander verbunden sind, und ein Verfahren zu seiner Herstellung.

Für optische Breitbandkommunikation werden optische Bauteile benötigt, die die Leistung irgendeines von n ankommenden Kanälen auf n abgehende Kanäle verteilen. Für n > 2 nennt man diese Bauteile Sternkoppler. Diese Koppler sollen möglichst geringe Einfügeverluste haben und die Leistung möglichst gleichmässig auf die n abgehenden Kanäle verteilen, unabhängig von der Art der Anregung. Für ein Bandbreite × Länge-Produkt grösser als einige 10 MHz × km kommen als Übertragungsmedium im Bereich von Multimode-Fasern nur noch Gradienten-Fasern in Betracht.

Bekannte Realisierungen solcher Sternkoppler sind solche, bei denen die Mischerzone aus verschmolzenen Fasern, aus getaperten und verschmolzenen Fasern, aus einem planaren, unmantelten Faserband oder aus einem planaren nicht ummantelten Glasplättchen (vgl. die ältere Patentanmeldung EP-A Nr. 37006) besteht. Zur Herstellung einer Mischerzone aus verschmolzenen Fasern müssen die Mäntel der Fasern im Mischerbereich vor dem Verschmelzen entfernt werden. Aufgrund des Koppelmechanismus eignen sich Mischerzonen aus verschmolzenen Fasern oder aus getaperten und verschmolzenen Fasern vornehmlich für Stufenprofil-Fasern. Diese Mischer koppeln nämlich grundsätzlich modenabhängig aus, wobei sich bei Gradienten-Fasern diese Modenabhängigkeit noch besonders nachteilig auswirkt. Das hat unter anderem zur Folge, dass das Licht einer ankommenden Faser nicht gleichmässig auf alle n abgehenden Fasern verteilt wird. Die Gleichförmigkeit der Leistungsverteilung wird zwar umso besser, je länger der Koppelbereich wird, mit längerem Koppelbereich steigen jedoch gleichzeitig auch die Verluste. Überdies ist es schwierig, aus den genannten Mischern ein robustes Bauelement herzustellen. Eine Einbettung der Fasern in einen Kleber zur Erzielung einer guten mechanischen Festigkeit wirft nämlich Probleme auf, weil im Mischerbereich das Licht bis zum Kleber gelangt und dadurch die Verluste noch erhöht werden. Die in der älteren Patentanmeldung EP-A Nr. 37006 möglichen Realisierungen verursachen bei ihrer Verwendung für Gradienten-Systeme ohne spezielle Massnahmen hohe Einfügerverluste oder ungenügende Leistungsgleichverteilung.

Aus dem Artikel „Laser focus", Bd. 15, Nr. 10, Okt. 1979, S. 60-66, ist ein Sternkoppler nach dem Oberbegriff des Anspruchs 1 bekannt. Ein Sternkoppler nach dieser Veröffentlichung besitzt Element-Lichtleitfasern, deren Abmessungen mit den Abmessungen der System-Lichtleitfasern übereinstimmen. Nach Meinung des Autors dieser Veröffentlichung können dann bessere Ergebnisse erzielt werden, wenn der Kerndurchmesser der System-Faser kleiner ist als der Kerndurchmesser der Element-Lichtleitfaser. Eine solche Ausgestaltung verursacht jedoch am Ausgang des Sternkopplers bei der Kopplung von den Element-Lichtleitfasern zu den System-Lichtleitfasern erhebliche Koppelverluste.

Der Erfindung liegt die Aufgabe zugrunde, einen Sternkoppler der eingangs genannten Art anzugeben, der auch bei Verwendung in einem Kommunikationssystem mit Gradientenprofil-Fasern geringe Einfügeverluste und eine gute Leistungsgleichverteilung auf alle abgehenden Fasern aufweist.

Diese Aufgabe wird erfindungsgemäss durch die kennzeichnenden Merkmale des Anspruchs 1 gelöst. Vorteilhafterweise sollen die Mäntel der Lichtleitfasern möglichst dünn sein.

Schwankungen von 100% in der Mantelstärke dieser Lichtleitfasern haben jedoch praktisch keinen Einfluss. Wichtiger ist es vielmehr, den Gesamtdurchmesser dieser Lichtleitfasern gleich dem Kerndurchmesser der System-Gradienten-Fasern zu wählen. Die Dicke des Mischerplättchens wird etwa gleich dem Durchmesser der Lichtleitfasern des Sternkopplers gemacht.

Ein Sternkoppler nach der Erfindung kann ausser durch die in der älteren Patentanmeldung EP-A Nr. 37006 beschriebenen Verfahren auch in vorteilhafter Weise nach in weiteren Unteransprüchen angegebenen Verfahren hergestellt werden.

Ein Ausführungsbeispiel der Erfindung ist in der Zeichnung dargestellt und wird im folgenden näher beschrieben.

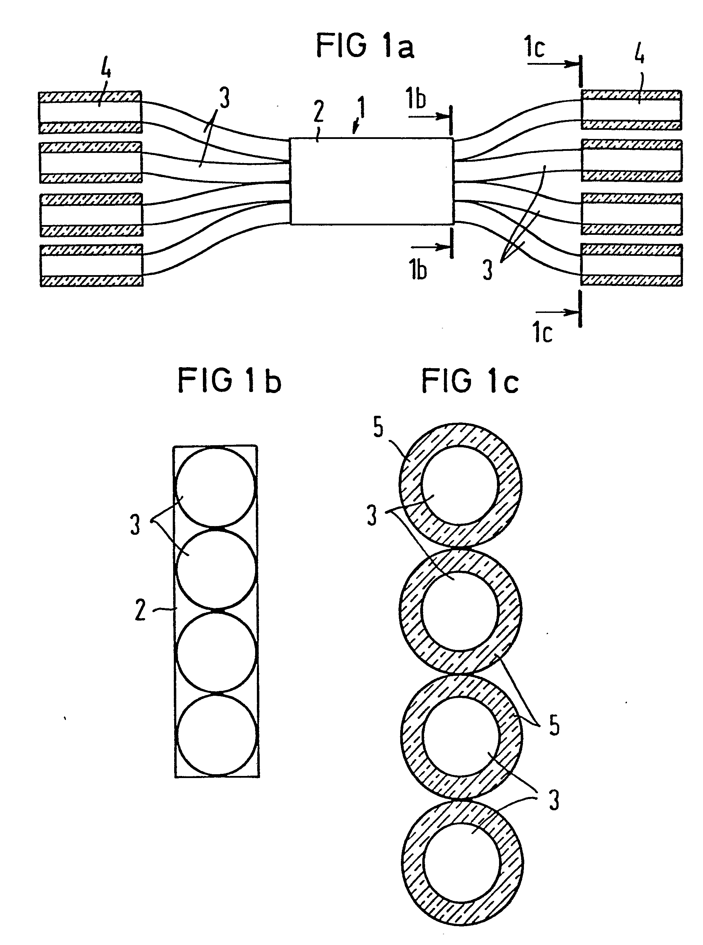

Fig. 1a bis 1e zeigen den prinzipiellen Aufbau eines Sternkopplers nach der Erfindung für Gradienten-Fasern als System-Fasern.

Fig. 1a zeigt einen optischen Sternkoppler 1 mit einem planaren Lichtwellenleiter 2 als Mischerelement. An die Stirnflächen dieses planaren Lichtwellenleiters 2 stossen eingangsseitig und ausgangsseitig die Element-Lichtleitfasern 3 an. Die Dicke des Mischerelements 2 entspricht dem Durchmesser der Element-Lichtleitfasern 3. An die Element-Lichtleitfasern 3 werden im Bedarfsfall die System-Fasern angekoppelt.

Fig. 1b zeigt einen Schnitt durch den Sternkoppler nach Fig. 1a längs der Linie 1b-1b. Dieser Schnitt zeigt noch einmal, dass die Dicke des Mischerelements 2 dem Gesamtdurchmesser der Element-Lichtleitfasern 3 entspricht.

Fig. 1c zeigt einen Schnitt durch den Sternkoppler nach Fig. 1a längs der Linie 1c-1c. Dieser Schnitt stellt noch einmal dar, dass der Gesamtdurchmesser der Element-Lichtleitfasern 3 gleich dem Kerndurchmesser der System-Gradienten-Fasern 4 ist. Der Mantel 5 der System-Gradienten-Fasern 4 liegt in diesem Schnitt vollständig ausserhalb der Element-Lichtleitfasern 3, wobei wie gesagt der Gesamtdurchmesser der Element-Lichtleitfasern 3 mit dem Kerndurchmesser der System-Gradienten-Fasern 4 zusammenfällt.

Für den Sternkoppler 1 nach der Erfindung können als Element-Lichtleitfasern 3 Stufenprofil- oder Gradientenprofil-Fasern Verwendung finden. Als System-Fasern finden in beiden Fällen jedenfalls System-Gradienten-Fasern 4 Verwendung. Um in beiden Fällen die Verluste gering zu halten, sollten die Mäntel der Element-Lichtleitfasern 3 möglichst dünn (≤ μm) sein. Schwankungen von 100% in der Mantelstärke haben jedoch praktisch keinen Einfluss.

Da der Sternkoppler nach den Figuren in einem System mit Gradienten-Fasern eingesetzt wird, treten im Vergleich zu einem System mit Stufenindex-Fasern ungefähr 2-3 dB Zusatzverluste auf, weil das Mischerelement 2 einem Wellenleiter mit Stufenprofil entspricht und beim Verteilen des Lichts unvermeidbar ein Übergang von einem Stufenprofil auf ein Gradientenprofil stattfindet. Experimentell wurde ein 2×32 Tor Sternkoppler untersucht. Da der Kerndurchmesser der System-Gradientenfasern 65 μm betrug, wurde auch der Gesamtdurchmesser der Element-Fasern zu 65 μm Manteldicke gewählt. Die Mischerplättchendicke betrug ebenfalls etwa 65 μm. Es wurde ein Einfügeverlust von etwa 4 dB gemessen. Dieser Verlust bezieht sich auf die gesamte Leistung in den 32 Ausgangs-System-Gradientenlichtleitfasern zu der Leistung in einer Eingangs-System-Gradientenlichtleitfaser. Die Schwankung der Leistungen über alle Ausgangs-System-Lichtleitfasern ergab sich zu ± 0,5 dB. Leistungsverteilung und Einfügeverlust fielen praktisch gleich aus, unabhängig davon, ob die Element-Lichtleitfasern 3 Stufenprofil- oder Gradientenprofil-Fasern waren. Bei Verwendung von Stufenprofil-Element-Fasern 3 erfolgt an den Stirnseiten des Mischerelements 2 ein Übergang von einem Stufenprofil auf einen Stufenprofil-Planar-Wellenleiter 2. Werden als Element-Lichtleitfasern 3 Element-Gradientenprofillichtleitfasern verwendet, so besteht der Vorteil dieser Anordnung darin, dass der gleiche Lichtleitfasertyp verwendet und somit weniger Fehlanpassungen in den Modentypen der jeweiligen Lichtleitfasern auftreten. Werden als Element-Lichtleitfasern 3 Element-Stufenprofillichtleitfasern verwendet, so kann ein Vorteil dieser Anordnung darin bestehen, dass die Technologie zur Herstellung von Fasern mit dünnem Mantel für Stufenprofil-Fasern möglicherweise einfacher ist als für Gradientenprofil-Fasern.

Die Herstellung eines Sternkopplers nach der Erfindung kann ausser durch die in der älteren Patentanmeldung EP-A Nr. 37006 vorgeschlagenen Massnahmen auch am einfachsten folgendermassen erfolgen: Das Mischerplättchen 2 entsprechender Dicke, das bis auf die beiden Stirnseiten poliert ist, wird über entsprechende optische Kleber zwischen Substrat 9 und Deckel 8 befestigt. Substrat 9 und Deckel 8 sollen vorteilhafterweise einen annähernd gleichen Ausdehnungskoeffizienten und nicht höheren Brechungsindex als das Material des Mischerelements 2 haben. Die Klebedicke zwischen Substrat 9 und Mischerelement 2 beträgt etwa 2 μm. Die Stirnseiten des Mischerelements 2 werden dann zusammen mit Substrat 9 und Deckel 8 poliert. Die Faserzeilen werden dadurch hergestellt, dass die Element-Lichtleitfasern 3 auf seitliche Berührung auf einem Substrat 7 fixiert werden, dessen Dicke mit der Dicke des Substrats 9 des Mischerplättchens übereinstimmt. Jeweils ein Deckel 6 über den Element-Lichtleitfasern 3 bildet den Abschluss der Sandwichstruktur, wobei wieder ein entsprechender Kleber zwischen Substrat und Deckel 6 angebracht ist. Die Stirnseiten der Element-Lichtleitfasern 3 samt Substrat 7 und Deckel 6 werden dann poliert und abschliessend die drei Teile (zwei Stück Faser-Sandwich und ein Mischerplättchen-Sandwich) auf einem gemeinsamen Träger 10 fixiert und gegebenenfalls mit einem Deckel abgeschlossen, wobei nur darauf geachtet werden muss, dass die Mischer-Stirnflächen die Faserzeilen abdecken. Die drei Teile des Sternkopplers liegen dadurch in einer Ebene, wobei aufgrund der vorgeschlagenen Element-Lichtleitfasern 3 ein minimaler Koppelverlust gewährleistet ist.

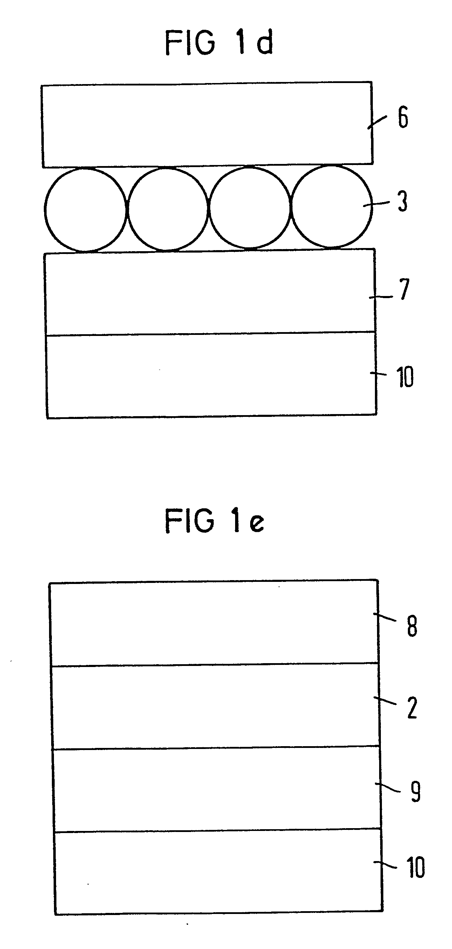

Fig. 1d zeigt schematisch die Stirnseite des Lichtleitfaser-Sandwichs, das aus den Lichtleitfasern 3, einem Substrat 7 und einem Deckel 6 besteht, wie es auf dem gemeinsamen Träger 10 des Sternkopplers fixiert ist.

Fig. 1e zeigt schematisch die Stirnseite des Mischerplättchen-Sandwichs, das aus dem Mischerelement 2, einem Substrat 9 und einem Deckel 6 besteht, wie es auf dem gemeinsamen Träger 10 fixiert ist.

Die Mäntel der Element-Lichtleitfasern 3 sollen so dünn wie möglich sein. Solche Lichtleitfasern können mit einem der folgenden Verfahren hergestellt werden:

1. CVD-Methode mit Aussenabscheidung, wobei abschliessend ein homogenes Material entsprechender Dicke für den Mantel auf den Lichtleitfaserkern abgeschieden wird.

2. Chemisches Ätzen des Fasermantels auf die gewünschte Dicke.

3. CVD-Methode mit Innenabscheidung von Material mit Gradientenindex-Profil als Vorform für das nachfolgende Kollabieren, wobei die Vorform auf die gewünschte Manteldicke abgeschliffen wird.

Stufenprofil-Element-Fasern mit dünnem Mantel lassen sich auch einfach über das Doppeltiegel-Verfahren herstellen.

## Patentansprüche

1. Optischer Sternkoppler für Multimode-System-Lichtleitfasern (4), bei dem zwei Bündel von Element-Lichtleitfasern (3) über ein aus einem planaren Wellenleiter bestehendes Mischerelement (2) miteinander verbunden sind, an dessen Ein- bzw. Ausgang die ankommenden und abgehenden Element-Lichtleitfasern (3) derart angekoppelt sind, dass ihre Packungsdichte möglichst gross ist, wobei die Element-Lichtleitfasern (3) in ihrer Gesamtheit demselben Fasertyp angehören, dadurch gekennzeichnet, dass die System-Lichtleitfasern (4) Gradienten-Fasern sind, dass die Dicke des Mischerelementes (2) annähernd gleich dem Gesamtdurchmesser der Element-Lichtleitfasern (3) ist, dass der gemeinsame Fasertyp, dem die Element-Lichtleitfasern (3) angehören, entweder der von Gradienten-Fasern oder von Stufenprofil-Fasern ist, dass der Gesamtdurchmesser der Element-Lichtleitfasern (3) annähernd gleich dem Kerndurchmesser der mit dem Sternkoppler zu verbindenden System-Lichtleitfasern (4) ist, und dass der Kerndurchmesser der Element-Lichtleitfasern (3) kleiner als der Kerndurchmesser der mit dem Sternkoppler zu verbindenden System-Lichtleitfasern (4) ist.

2. Optischer Sternkoppler nach Anspruch 1, dadurch gekennzeichnet, dass die Mäntel der Element-Lichtleitfasern (3) möglichst dünn sind.

3. Verfahren zur Herstellung eines optischen Sternkopplers nach einem der Ansprüche 1 oder 2, dadurch gekennzeichnet, dass ein Mischerelement (2) entsprechender Dicke, das bis auf die beiden Stirnseiten optisch poliert ist, über entsprechende optische Kleber zwischen Substrat (9) und Deckel (8) befestigt wird, dass dann die Stirnseiten des Mischers (2) zusammen mit Substrat (9) und Deckel (8) poliert werden, dass die Element-Lichtleitfasern (3) auf seitliche Berührung auf einem Substrat (7) fixiert werden, dessen Dikke mit der Dicke des Substrats (9) des Mischers (2) übereinstimmt, dass dann jeweils mit einem Deckel (6) über den Element-Lichtleitfasern (3) die Sandwichstruktur abgeschlossen wird, wobei wieder ein entsprechender Kleber zwischen Substrat und Deckel (6) angebracht ist, dass dann die Stirnseiten der Element-Lichtleitfasern (3) samt Substrat (7) und Deckel (6) poliert werden, und dass abschliessend die drei Teile — zwei Stück Lichtleitfasern-Sandwich und ein Mischerplättchen-Sandwich — auf einem gemeinsamen Träger (10) fixiert und gegebenenfalls mit einem Deckel abgeschlossen werden.

4. Verfahren zur Herstellung eines optischen Sternkopplers nach Anspruch 3, dadurch gekennzeichnet, dass die Klebedicke zwischen Substrat und Mischer etwa 2 µm beträgt.

## Claims

1. An optical star coupler for multimode-system light-conducting fibres (4), wherein two bunches of light-conducting fibre elements (3) are connec-ted to one another *via* a mixer element (2) which consists of a planar waveguide and whose input and output are coupled to the incoming and outgoing light-conducting fibre elements (3) in such manner that their packing density is as great as possible, wherein the light-conducting fibre elements (3) belong as a whole to the same fibre type, characterised in that the multimode-system light-conducting fibres (4) are gradient fibres, that the thickness of the mixer element (2) is approximately equal to the overall diameter of the light-conducting fibre elements (3), that the common fibre type to which the light-conducting fibre elements (3) belong is either that of gradient fibres or that of stepped profile fibres, that the overall diameter of the light-conducting fibre elements (3) is approximately equal to the core diameter of the multimode-system light-conducting fibres (4) which are to be connected to the star coupler, and that the core diameter of the light-conducting fibre elements (3) is smaller than the core diameter of the multimode-system light-conducting fibres (4) which are to be connected to the star coupler.

2. An optical star coupler as claimed in Claim 1, characterised in that the casings of the light-conducting fibre elements (3) are as thin as possible.

3. A process for the production of an optical star coupler as claimed in Claim 1 or 2, characterised in that a mixer element (2) of corresponding thickness which is optically polished except for the two end faces is attached by means of appropriate optical adhesives between substrate (9) and cover (8), that then the end faces of the mixer (2) are polished together with substrate (9) and cover (8), that the light-conducting fibre elements (3) are fixed on a substrate (7) in lateral contact, where the thickness of the substrate (7) is identical to the thickness of the substrate (9) of the mixer (2), that then the sandwich structure is closed by a cover (6) over the light-conducting fibre elements (3), and again an appropriate adhesive is applied between substrate and cover (6), that then the end faces of the light-conducting fibre elements (3) together with substrate (7) and cover (6) are polished, and finally the three components — two light-conducting fibre sandwich components and one mixer-disc sandwich — are fixed on a common carrier (10) and possibly sealed by a cover.

4. A process for the production of an optical star coupler as claimed in Claim 3, characterised in that the thickness of the adhesive between substrate and mixer amounts to approximately 2 µm.

## Revendications

1. Coupleur optique en étoile pour des fibres optiques de système multimode (4) dans lequel deux faisceaux de fibres optiques élémentaires (3) sont reliés entre eux par l'intermédiaire d'un élément mélangeur (2) constitué par un guide d'ondes plat, et à une entrée et à une sortie duquel les fibres optiques élémentaires (3) d'arrivée et de départ sont accouplées de telle sorte que leur densité de montage soit aussi grande que possible, toutes les fibres optiques élémentaires (3) étant d'un même type, caractérisé par le fait que les fibres optiques (4) du système sont des fibres à gradient, que l'épaisseur de l'élément mélangeur (2) est approximativement égale au diamètre total des fibres optiques élémentaires (3), que le type commun, auquel appartiennent les fibres optiques élémentaires (3), est soit le type de fibres à gradient, soit le type de fibres à profil étagé, que le diamètre d'ensemble des fibres optiques élémentaires (3) est égal approximativement au diamètre du noyau des fibres optiques du système (4) devant être reliées au coupleur en étoile, et que le diamètre du noyau des fibres optiques élémentaires (3) est inférieur au diamètre du noyau des fibres optiques du système (4) devant être reliées au coupleur en étoile.

2. Coupleur optique en étoile suivant la revendication 1, caractérisé par le fait que les gaines des fibres optiques élémentaires (3) sont aussi minces que possible.

3. Procédé pour fabriquer un coupleur optique en étoile suivant l'une des revendications 1 ou 2, caractérisé par le fait qu'on fixe un élément mélangeur (2) possédant une épaisseur appropriée et qui est poli avec la qualité optique hormis au niveau de ses deux faces frontales, par l'intermédiaire d'une colle optique appropriée, entre le substrat (9) et le couvercle (8), qu'on polit ensuite les faces frontales du mélangeur (2), ainsi que le substrat (9) et le couvercle (8), qu'on fixe les fibres optiques élémentaires (3) au moyen de l'établissement d'un contact latéral sur un substrat (7), dont l'épaisseur est égale à l'épaisseur du substrat (9) du mélangeur (2), qu'on ferme ensuite la structure sandwich avec un couvercle (6) placé au-dessus des fibres optiques élémentaires (3), par une nouvelle interposition d'une colle appropriée entre le substrat et le couvercle (6), qu'on polit alors les faces frontales des fibres optiques élémentaires (3) ainsi que le substrat (7) et le couvercle (6) et que, pour terminer, on fixe les trois éléments — deux éléments du sandwich des fibres optiques et un sandwich de la plaquette du mélangeur — sur un support commun (10) et qu'on ferme éventuellement l'ensemble avec un couvercle.

4. Procédé pour fabriquer un coupleur optique en étoile suivant la revendication 3, caractérisé par le fait que l'épaisseur de la colle entre le substrat et le mélangeur est égale à environ 2 μm.

# FIG 1a

# FIG 1b

# FIG 1c

## FIG 1 d

6

3

7

10

## FIG 1 e

8

2

9

10